# EUROPEAN PATENT APPLICATION

(11) **EP 4 549 762 A1**
(43) Date of publication of application: **07.05.2025**
(21) Application number: 24159985.1
(22) Date of filing: 27.02.2024
(51) Int. Cl.: F16B 43/00, F16B 3/06, F16B 2/00, F16B 5/02

(54) **BOLT SLEEVE WITH EXTRA FEATURES FOR ALIGNMENT**

(30) Priority: 02.11.2023 EP 23207472
(71) Applicant: Volvo Car Corporation, 405 31 Göteborg (SE)
(72) Inventor: Skagius, Adam, 413 18 Göteborg (SE); Nordell, Magnus, 425 65 Hisings Kärra (SE)
(74) Representative: Nederlandsch Octrooibureau

(57) **Abstract**

A cylindrical sleeve comprising an exterior surface configured to engage with a receiving part when the cylindrical sleeve is connected to a nut or a bolt/screw, wherein in the nut or the bolt/screw assembles the receiving part; and a hollow interior.

## Description

### Technical Field

The present disclosure relates to the fastener field, in particular sleeves used in conjunction with bolts, screws, and/or nuts.

### Background of the Present Disclosure

Bolts and screws may join one or more receiving parts at a bolted joint or a screw joint. For brevity, the term bolt will be used to mean a bolt or a screw. Additionally, the term bolted joint will be used to mean a bolted joint or a screw joint.

A serration bolt may have serrations on its shank to create a locking feature at the bolted joint and therefore avoid slipping. The serrations may avoid slipping by creating a clamping force at the bolted joint. Generally, the larger the bolt the larger the clamping force it can generate. Serration bolts, having serrations on its shank, have been used to downsize bolts while maintaining the necessary clamping force at the bolted joint when assembling receiving parts.

However, serration bolts require access to both sides of a receiving part during assembly. For example, a first side of the assembly may require enough clearance to insert the serration bolt and a second side of the assembly may require enough clearance for a tightening tool to fully assemble the receiving part(s) with the serration bolt.

There is a trend to make things smaller and more compact. For example, vehicle engines have become compact, which reduces the space for access to the tip of a bolt or the head of a bolt needed to assemble the engine. Once the bolt is in its final position, it may be difficult to access the bolt to loosen or tighten it.

Additionally, the bolted joint may be subject to shear forces which make the bolt slip. To withstand the shear forces and prohibit the bolt from slipping, one may use larger bolts to generate more friction or clamping force, as compared to a smaller bolt, and prevent the bolt from slipping. However, larger bolts are in conflict with the trend to make things smaller and more compact.

The background section relating to using serration bolts in the assembly of receiving part(s) is merely intended to provide a contextual overview of some current issues and is not intended to be exhaustive. Other contextual information may become apparent to a person of skill in the art upon review of the following detailed description.

### Summary of the Present Disclosure

According to an embodiment, a cylindrical sleeve may comprise an exterior surface configured to engage with a receiving part when the cylindrical sleeve is connected to a nut or a bolt/screw, wherein in the nut or the bolt/screw assembles the receiving part; and a hollow interior. Providing a cylindrical sleeve with such an exterior surface results in a better mechanical lock, thereby minimizing and/or preventing slippage of a bolt by protected it from shear forces.

The exterior surface of a cylindrical sleeve may create a mechanical lock between the cylindrical sleeve and a receiving part. The cylindrical sleeve helps to protect a bolt used in assembling the receiving part from shear forces which can help to minimize or prevent slippage. In particular, the exterior surface of the cylindrical sleeve creates friction or clamping forces between the cylindrical sleeve and a surface of the receiving part. The cylindrical sleeve reduces the shear area to which the bolt is exposed and reduces the exposure of a bolt to shear forces.

The mechanical lock of the cylindrical sleeve may protect a bolt or screw from shear forces. This allows an assembly to reduce the size of bolts due to the reduced shear forces acting on the bolted joint. Reducing bolt size can be done without sacrificing clamping force because, as compared to a conventional bolt alone, the mechanical lock generates a larger clamping force. Therefore, such an assembly may replace conventional bolts with smaller bolts or screws with a cylindrical sleeve because the cylindrical sleeve protects the bolted joint from shear forces. Reducing the bolt sizes in an assembly may reduce cost, materials and weight of an assembly.

Including the cylindrical sleeve with a bolt or nut can further reduce part handling and piece price because the reduced bolt size requires less assembly torque as compared to a larger bolt. As a result, there is a potential for using smaller tools during assembly.

According to an embodiment, the cylindrical sleeve includes a first end facing the nut or the bolt/screw; and a ring extending from the first end, wherein the ring fits into a groove of the nut or a bolt head of the bolt/screw to connect the cylindrical sleeve to the nut or the bolt/screw, and wherein the nut or bolt/screw can rotate independently of the cylindrical sleeve. Such a ring prevents the cylindrical sleeve from moving translationally along a shank of a bolt.

According to an embodiment, the cylindrical sleeve is formed of a ferrous material. Ferrous materials, such as phosphorous steel, are strong and cost-effective materials that may be suitable for vehicle parts. Other materials may be suitable for other applications. In addition to being strong and cost effective, ferrous materials are readily available. Cylindrical sleeves made of ferrous materials are able to generate a strong mechanical lock between the cylindrical sleeve and a receiving part thereby helping to protect a bolt or screw from shear forces.

According to an embodiment, the cylindrical sleeve includes an exterior surface that is knurled and/or comprises serrations. Such a knurled exterior surface creates friction and/or clamping forces between the cylindrical sleeve and a receiving part of an assembly, and therefore may create a mechanical lock between the cylindrical sleeve and a receiving part. Such a mechanical lock between the cylindrical sleeve and the receiving part allows the cylindrical sleeve to absorb shear forces that would otherwise act on the bolted joint. The friction, locking and/or clamping force helps to minimize or prevents slippage. The cylindrical sleeve may comprise other textures on the exterior surface capable of providing the necessary friction and/or clamping force.

According to an embodiment, the exterior surface of the cylindrical sleeve has a taper from the first end of the cylindrical sleeve having a first circumference to a second end of the cylindrical sleeve having a second circumference, wherein the first circumference is greater than the second circumference. Such a taper allows for a mechanical lock between the cylindrical sleeve and the receiving part. The mechanical lock allows the cylindrical sleeve to absorb shear forces that would otherwise act on the bolted joint.

According to an embodiment, the exterior surface of the cylindrical sleeve is generates the mechanical lock between the cylindrical sleeve and the receiving part such that it absorbs shear forces. Such a cylindrical sleeve and mechanical lock reduces the shear forces acting upon a bolted joint.

According to an embodiment, the taper of the exterior surface of the cylindrical sleeve includes an angle based on a material of the cylindrical sleeve and/or the receiving part. Such as if both a receiving part and the cylindrical sleeve are composed of similarly hard materials, the angle of the taper may be configured to generate an exterior surface with a gentle slope. Alternatively, if the receiving part and cylindrical sleeve are composed of materials of different hardness, the angle of the taper may be configured to generate an exterior surface with a steep slope. Such angles allow the cylindrical sleeve to create a mechanical lock with the receiving part.

According to an embodiment, the exterior surface of the cylindrical sleeve has a smooth surface. The smooth surface may be even and regular and in combination with the angle of the taper generate a mechanical lock between the cylindrical sleeve between the cylindrical sleeve and the receiving part.

According to an embodiment, the hollow interior of the cylindrical sleeve is further configured to surround a bolt shaft of the bolt. Surrounding the shaft of a bolt, in particular the shank of a bolt, allows the cylindrical to absorb shear forces that may act upon a bolted joint. As a result this may prevent the bolted joint from slipping.

The cylindrical sleeve of any of claims 5-9, wherein the second circumference is smaller than a thread circumference of a threaded portion of the bolt.

According to an embodiment, the cylindrical sleeve may extend perpendicularly from a nut or the bolt head.

According to an embodiment, the second end of the cylindrical sleeve faces away from a bolt head of the bolt/screw and has a circumference that is smaller than a ring circumference of a ring, where the ring extends from a shank of the bolt/screw. Such a ring prevents the cylindrical sleeve from moving translationally along a shank of a bolt.

According to an embodiment, the cylindrical sleeve includes a ring at an end of the cylindrical sleeve, where the ring extends into the hollow interior and fits in a groove of a shank of the bolt/screw. The ring loosely connects the cylindrical sleeve to the shank of the bolt/screw. Such a ring and groove prevent the cylindrical sleeve from moving translationally along a shank of the bolt.

They cylindrical sleeve may be connected to a bolt or nut in such a way that the cylindrical sleeve may rotate relative with respect to the bolt or nut when connected to a bolt or nut. This allows the bolt or nut to be loosened or tightened without disturbing the mechanical lock between the cylindrical sleeve and the receiving part.

A bolt or screw may include the cylindrical previously described. The bolt or screw may comprise a head, a shank and a threaded portion. The cylindrical sleeve may be installed on the bolt or screw such that the cylindrical sleeve is between the head and threaded portion of the bolt or screw and around the shank of the bolt or screw.

A nut may include the cylindrical sleeve previously described. The nut may comprise a rim and the cylindrical sleeve may comprise a notch. The cylindrical sleeve may be installed on the nut such that the notch of the cylindrical sleeve receives the rim of the nut and receive a bolt shaft.

### Brief Description of the Drawings

The present disclosure will now be described in further detail with reference to the drawings that shows one embodiment of the present disclosure:
FIG. 1A is a perspective view of a cylindrical sleeve to create a locking function according to at least one example of the disclosure;
FIG. 1B is a cross-sectional view of the cylindrical sleeve of FIG. 1A;
FIG. 1C is an end view of the cylindrical sleeve of FIG. 1A;
FIG. 2A is a perspective view of a tapered cylindrical sleeve to create a locking function according to at least one example of the disclosure;
FIG. 2B is a cross-sectional view of the tapered cylindrical sleeve of FIG. 2A;
FIG. 2C is an end view of the tapered cylindrical sleeve of FIG. 2A;
FIGS. 3A - 3E are cross-sectional views of a tapered sleeve which is preassembled with a bolt or screw according to at least one example of the disclosure;
FIG. 4 is a cross sectional view of a tapered sleeve which is preassembled with a nut according to at least one example of the disclosure;
FIGS. 5A - 5F are perspective views of tapered sleeves with different surface textures of exterior surface;
FIG. 6 is a cross sectional view of the tapered sleeve connected to a bolt to join two receiving parts;
FIG. 7 is a cross sectional view of the tapered sleeve connected to a nut mated with a bolt to join two receiving parts; and
FIG. 8 is a cross sectional view of the tapered sleeve connected to a bolt and a nut to joint two receiving parts.

### Detailed Description

The present disclosure is directed to a cylindrical sleeve for use with a fasteners such as bolts, screws, and/or nuts. The cylindrical sleeve includes an exterior surface configured to generate a mechanical lock between the cylindrical sleeve and a receiving part of an assembly and can have any number of different surface textures including but not limited to smooth, dimples, rough turned, serrations, a knurled surface, spiral serrations, a hatched surface, and a pattern of bumps. The cylindrical sleeve may be used with a bolt or nut to create a bolted joint in assembling one or more receiving parts and/or may be included with a preassembled ("SEM") bolt, screw or nut to fasten one or more receiving parts.

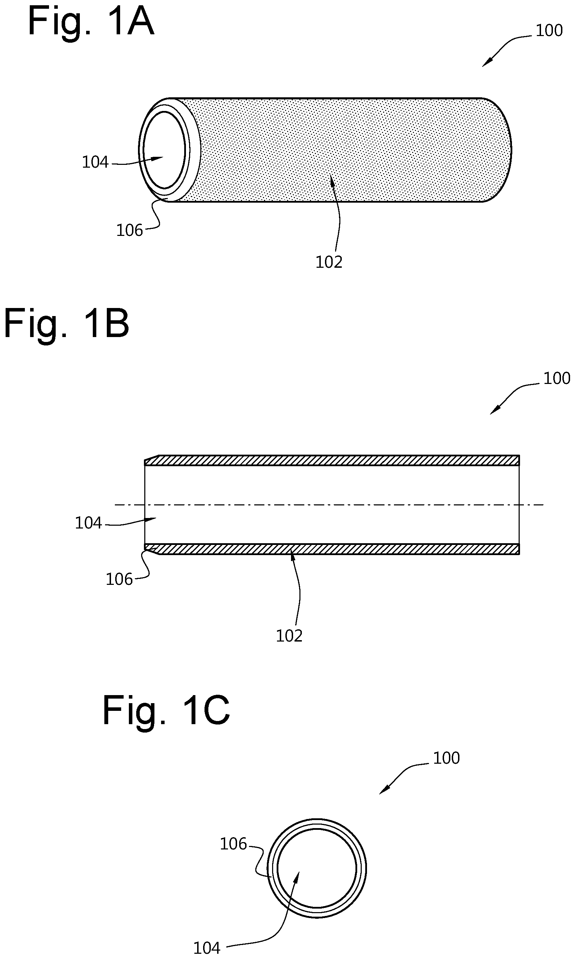

FIG. 1A is a perspective view of cylindrical sleeve 100, FIG. 1B is a cross-sectional view of cylindrical sleeve 100 and FIG. 1C is an end view of cylindrical sleeve 100. Cylindrical sleeve 100 includes exterior surface 102 with hollow interior 104.

Cylindrical sleeve 100 includes an exterior surface 102. Exterior surface 102 may include a texture which can extend over all or just part of exterior surface 102. For example, the texture may extend from a middle of cylindrical sleeve 100 to one end of cylindrical sleeve 100. In some embodiments (including that shown in Figs. 1A-1C), cylindrical sleeve 100 has bevel 106 at one end of cylindrical sleeve 100, which can help with insertion of cylindrical sleeve 100 into a hole or cavity of a receiving part for forming a bolted joint. Cylindrical sleeve 100 is typically hollow and includes hollow interior 104, which is typically cylindrical and extends through the length of cylindrical sleeve 100. Hollow interior 104 may be sized and configured to fit around a shank of the bolt or a threaded length of the bolt.

The length of cylindrical sleeve 100 may vary but is typically 0,5 to 3 times the diameter of the bolt for which it is intended to be used.

Cylindrical sleeve 100 may be formed from steel, phosphorus steel, aluminum, plastic or any other material appropriate for the desired assembly depending on assembly requirements.

Typically, Cylindrical sleeve 100 would be integrally formed, for example, from cutting, stamping, machining, moulding, pressing, printing, or any other suitable method. Texturing of exterior surface 102 could be done by shot peening, knurling, etching, pressing or any other suitable method.

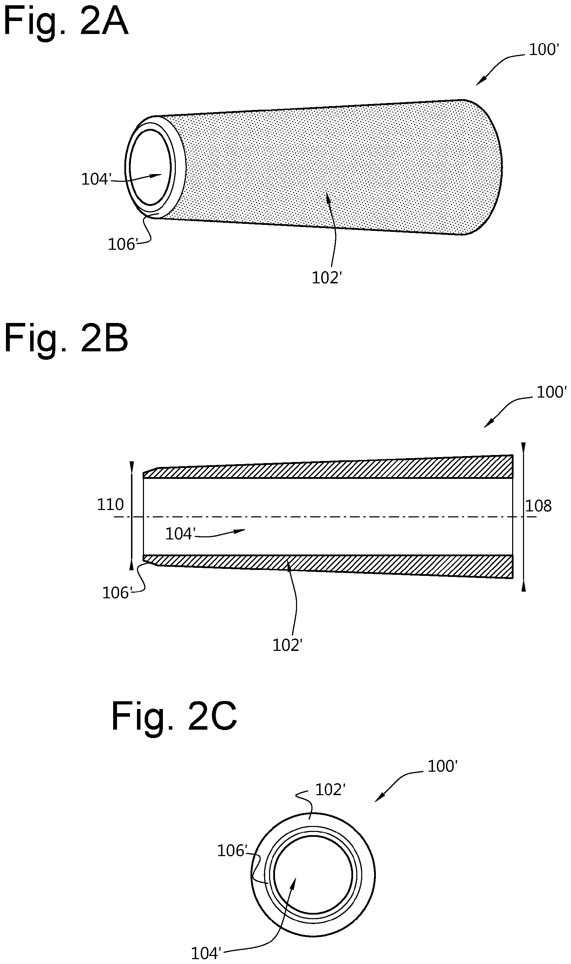

FIG. 2A is a perspective view of cylindrical sleeve 100', FIG. 2B is a cross-sectional view of cylindrical sleeve 100' and FIG. 2C is an end view of cylindrical sleeve 100'. Cylindrical sleeve 100' includes exterior surface 102' with hollow interior 104'.

Cylindrical sleeve 100' includes an exterior surface 102'. Exterior surface 102' may include a texture which can extend over all or just part of exterior surface 102'. For example, the texture may extend from a middle of cylindrical sleeve 100' to one end of cylindrical sleeve 100'. In some embodiments (including that shown in Figs. 2A-2C), cylindrical sleeve 100' has bevel 106' at one end of cylindrical sleeve 100', which can help with insertion of cylindrical sleeve 100' into a hole or cavity of a receiving part for forming a bolted joint. Cylindrical sleeve 100' is typically hollow and includes hollow interior 104', which is typically cylindrical and extends through the length of cylindrical sleeve 100'. Hollow interior 104' may be sized and configured to fit around a shank of the bolt or a threaded length of the bolt.

Exterior surface 102' of cylindrical sleeve 100' may include a taper. For example, the taper of exterior surface 102' may be such that cylindrical sleeve 100' has first circumference 108 at one end of cylindrical sleeve 100' and second circumference 110. As shown in in FIG. 2B, first circumference 108 is larger than second circumference. The end of first circumference 108 may be face a head of a bolt or a nut while the other end of second circumference 110 may be inserted into a hole or cavity of a receiving part. Cylindrical sleeve 100' may not include bevel 106' as the taper between first circumference 108 at one end and second circumference 110 at another end may help with insertion of cylindrical sleeve 100' into a hole or cavity of a receiving part without bevel 106'.

For example, according to certain embodiments, the taper of exterior surface 102' may have an angle of 17 degrees. Such a taper may have a slope from the end with the smaller circumference to the end with a larger circumference. Referring to FIG. 2B, the slope of exterior surface 102' would rise from the end with circumference 110 to the end with circumference 108 at an angle of 17 degrees.

The angle may be configured to provide the desired mechanical lock and may further depend on the materials of the cylindrical sleeve 100', receiving parts, assembly type among other variables.

The length of cylindrical sleeve 100' may vary but is typically 0,5 to 3 times the diameter of the bolt for which it is intended to be used.

Cylindrical sleeve 100' may be formed from steel, phosphorus steel, aluminum, plastic or any other material appropriate for the desired assembly depending on assembly requirements.

Typically, Cylindrical sleeve 100' would be integrally formed, for example, from cutting, stamping, machining, moulding, pressing, printing, or any other suitable method. Texturing of exterior surface 102' could be done by shot peening, knurling, etching, pressing or any other suitable method.

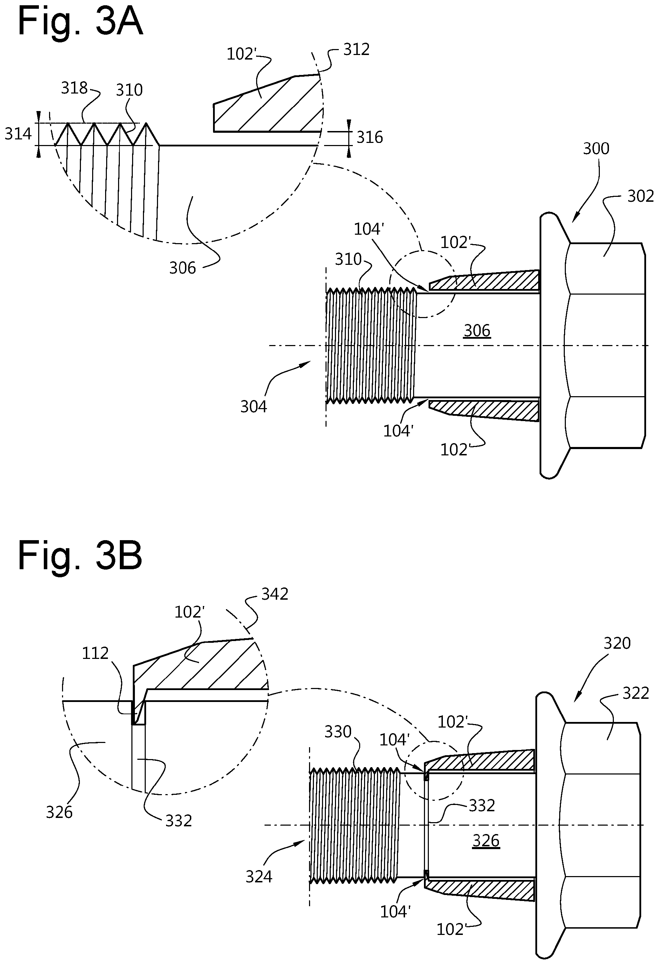

FIG. 3A is a cross sectional view of a first example of cylindrical sleeve 100, 100', which has been preassembled on bolt 300, (hereinafter "SEM bolt"). SEM bolt 300 includes a bolt head 302 and bolt shaft 304. Bolt shaft 304 includes threads 310 and shank 306. Shank 306 extends perpendicularly from head 302 and is typically smooth on the outer surface. Threads 310 extend from an end of shank 306 to a tip (not shown) of SEM bolt 300, though could end before an end of bolt 300 in some embodiments.

In this example, cylindrical sleeve 100, 100' is positioned between bolt head 302 and threads 310, positioned on shank 306. Cylindrical sleeve 100, 100' is in a position on bolt 300 such that surrounds shank 306 for at least part of the length of shank 306. The diameter of cavity 104, 104' is such that cylindrical sleeve 100, 100' is loose around shank 306 and can move and/or rotate with respect to shank 306, but not large enough to move over or slide past threads 310. Thus, bolt 300 may rotate without rotating cylindrical sleeve 100, 100' and vice versa when cylindrical sleeve 100, 100' installed on bolt 300. For example, the diameter of cavity 104, 104' is bigger than the outer diameter of shank 306. Additionally, threads 310 have a major diameter 318, which is the outer diameter of the peaks of the threads, that is bigger than the diameter of cavity 104, 104' and prevents cylindrical sleeve 100, 100' from sliding onto threads 310.

Closeup 312 illustrates how major diameter 318 keeps cylindrical sleeve 100, 100' on SEM bolt 300. The distance 314 from the surface of shank 306 to major diameter 318 is larger than distance 316 from the surface of shank 306 to cylindrical sleeve 100, 100'. For example, distance 314 may be greater than distance 316. Distance 316 should be less than a height of threads 310 but big enough to fit loosely around shank 306. For example, an M14 bolt having a major diameter of 14 mm and a minor diameter of 11.5 mm may include a cylindrical sleeve 100, 100' configured for an M14 bolt. This cylindrical sleeve hollow interior 104, 104' that is between 12.7 mm and 12.8 mm. This allows the cylindrical sleeve to loosely fit around the shank of an M14 bolt without being able to slide past the threads of an M14 bolt. A person of skill in the art understands that cylindrical sleeves configured for different sized bolts will have similarly proportional dimensions.

Alternatively, or in addition, an end of cylindrical sleeve 100, 100' could be crimped to ensure that the end of cylindrical sleeve 100, 100' cannot fit over threads 310, thereby ensuring that cylindrical sleeve 100, 100' stays connected around bolt 300. Such connection features are especially useful during transport and storage of the bolt, ensuring that the cylindrical sleeve 100, 100' does not become disconnected to bolt 300.

FIG. 3B is a cross sectional view of a second example of cylindrical sleeve 100, 100'. Cylindrical sleeve 100, 100' may be preassembled on bolt 320 to form a SEM bolt. SEM Bolt 320 may be similar to bolt 300, and similar parts have similar numbering. Bolt 320 includes bolt head 322 and bolt shaft 324. Bolt shaft 324 includes threads 330 and shank 326.

In this example, bolt shank 326 further includes groove 332 around an outer circumference of shank 326. Groove 332 may extend radially into shank 326, for example, an M50 bolt groove 332 may have a depth of up to 5 mm. Cylindrical sleeve 100, 100' may further include ring 112 configured to fit in groove 332 and restrict cylindrical sleeve 100, 100' from moving translationally along the length of bolt shank 326. Bolt head 322 may rotate with respect to cylindrical sleeve 100, 100' when installed on bolt 320. While cylindrical sleeve 100, 100' is shown in Figs. 3A-3B to be directly next to bolt head 302, 322 there may be some space between in some embodiments, particularly before the bolt 300, 320 is in use.

Closeup 342 illustrates how ring 112 fits in groove 332. Ring 112 is circular and extends around the inner circumference of hollow interior 104, 104', though could be interrupted or only extend partway around the inner circumference of the sleeve in other embodiments. In some embodiments, ring 112 could be only a bump, tooth or other protrusion; or a number of bumps, teeth or protrusions. Groove 332 is circular and extends around the full outer circumference of shank 326 extending toward a center of shank 326. Ring 112 and groove 332 are complementary in shape while still allowing for at least rotational movement of cylindrical sleeve 100, 100' with respect to the bolt 320. In some embodiments, groove 332 may be configured to allow for some translational movement along bolt shank 306, 326 as well. This allows cylindrical sleeve 100, 100' to be loosely connected to SEM bolt 320 and allows bolt 320 to rotate (for example, when being tightened for use) without rotating cylindrical sleeve 100, 100', thereby allowing for cylindrical sleeve 100, 100' to make and maintain a mechanical lock.

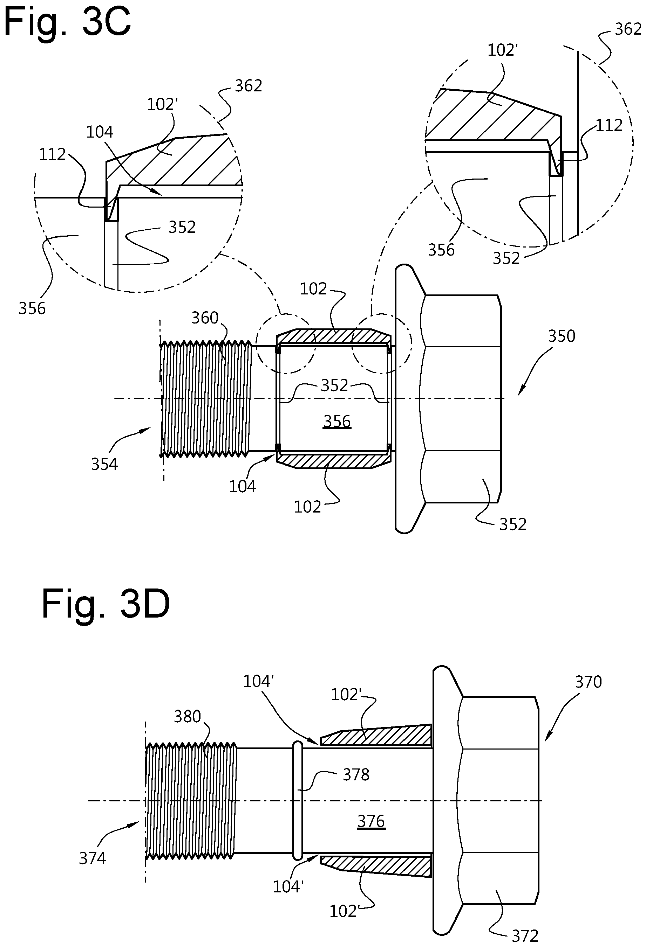

FIG. 3C illustrates cross sectional views of embodiment of bolt 350 which may also be suitable for restricting movement, such as axial movement, of cylindrical sleeve 100, 100'. Bolt 350 restricts movement of cylindrical sleeve 100, 100' translationally along the length of bolt shank 356.

Cylindrical sleeve 100, 100' may be preassembled on bolt 350 to form a SEM bolt. SEM Bolt 350 may be similar to bolt 320, and similar parts have similar numbering. Bolt 350 includes bolt head 352 and bolt shaft 354. Bolt shaft 354 includes threads 360 and shank 356.

In this example, bolt shank 356 further includes two grooves 352 around an outer circumference of shank 356. Grooves 352 may extend radially into shank 356, for example, an M50 bolt grooves 352 may have a depth of up to 5 mm. Cylindrical sleeve 100, 100' may further include two rings 112 configured to fit in groove 352 and restrict cylindrical sleeve 100, 100' from moving translationally along the length of bolt shank 356. Bolt head 352 may rotate with respect to cylindrical sleeve 100, 100'when installed on bolt 350. While cylindrical sleeve 100, 100' is shown in Figs. 3A-3C to be directly next to bolt head 302, 322, 352 there may be some space between in some embodiments, particularly before the bolt 300, 320, 352 is in use.

Closeup 362 illustrates how rings 112 fit in grooves 352. Rings 112 are circular and extend around the inner circumference of hollow interior 104, 104' at both ends of cylindrical sleeve 100, 100', though they could be interrupted or only extend partway around the inner circumference of the sleeve in other embodiments. In some embodiments, rings 112 could be only a bump, tooth or other protrusion; or a number of bumps, teeth or protrusions. Grooves 352 is circular and extends around the full outer circumference of shank 356 extending toward a center of shank 356. Rings 112 and grooves 352 are complementary in shape while still allowing for at least rotational movement of cylindrical sleeve 100, 100' with respect to the bolt 350. In some embodiments, grooves 352 may be configured to allow for some translational movement along bolt shank 306, 326, 356 as well. This allows cylindrical sleeve 100, 100' to be loosely connected to SEM bolt 350 and allows bolt 350 to rotate (for example, when being tightened for use) without rotating cylindrical sleeve 100, 100', thereby allowing for cylindrical sleeve 100, 100' to make and maintain a mechanical lock.

FIG. 3D illustrates cross sectional views of SEM bolt 370 which may also be suitable for restricting movement of cylindrical sleeve 100, 100'. SEM bolt 370 restricts movement of cylindrical sleeve 100, 100' translationally along the length of bolt shank 376. SEM bolt 370 may include bolt head 372 which further includes shank ring 378 on bolt shank 376. As shown, cylindrical sleeve 100, 100' fits on bolt shank 376 between bolt head 372 and shank ring 378. Shank ring 378 restricts movement of cylindrical sleeve 100, 100' and prevents it from coming into contact with threads 380. Embodiments of FIGS. 3A - 3D may be combined or used separately to restrict movement of cylindrical sleeve 100, 100'.

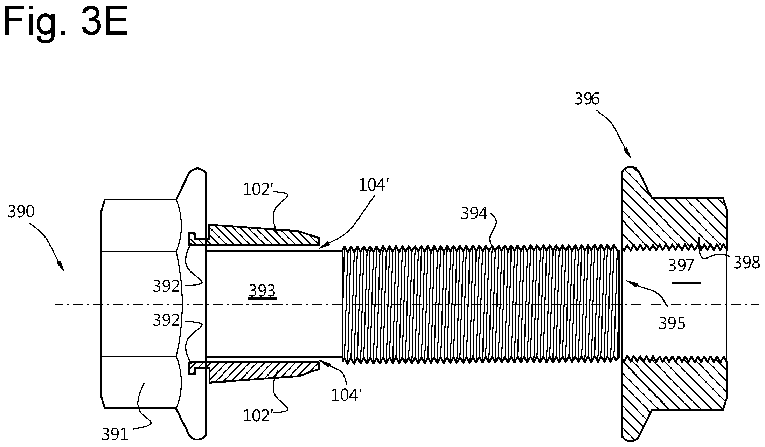

FIG. 3E illustrates a cross sectional view of SEM bolt 390. SEM bolt 390 is a further embodiment of cylindrical sleeve 100, 100' preassembled on SEM bolt 390. Cylindrical sleeve 100, 100' may further include a mechanism to connect to bolt head 391. As shown here, cylindrical sleeve includes rim 392 which extends from an end of cylindrical sleeve 100, 100'. Rim 392 may fit in a groove of bolt head 391 such that it loosely connects cylindrical sleeve 100, 100' to bolt head 391 and surrounds bolt shank 393. In this way cylindrical sleeve 100, 100' may extend perpendicularly form bolt head 391. SEM bolt 390 may be used in combination with nut 396 to connect receiving parts in an assembly. Nut 396 may receive bolt shaft 395 of SEM bolt 390. Bolt shaft 395 may be configured to fit in nut cavity 397 such that bolt threads 394 of bolt 390 engage with nut threads 398 such that they can assemble one or more receiving parts.

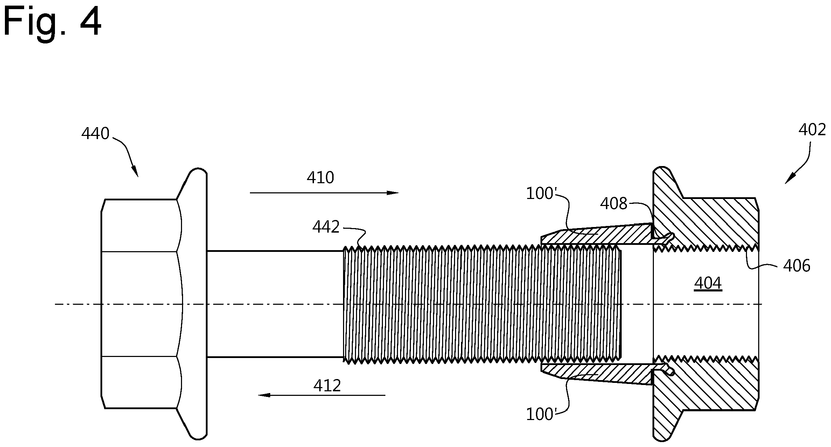

FIG. 4 illustrates a cross sectional view of SEM nut 402. SEM nut 402 includes cavity 404 configured to receive a bolt shaft of bolt 440. SEM nut 402 further includes internal threads 406 configured to engage with threads 442 of bolt 440. SEM nut 402 also includes a groove configured to receive nut rim 408 configured to connect to cylindrical sleeve 100, 100' to SEM nut 402 such that it is loosely connected to SEM nut 402. The loose connection allows SEM nut 402 to rotate while cylindrical sleeve does not.

Nut rim 408 may extend from one end of cylindrical sleeve 100, 100' such that when nut rim 408 is connected to a groove of nut 402, cylindrical sleeve 100, 100' extends perpendicularly form nut 402. Cylindrical sleeve 100, 100' is connected to nut 402 such that cavity 404 aligns with hollow interior 104, 104' to receive a bolt shaft of bolt 440. The groove of nut 402 and nut rim 408 are further configured to ensure that cylindrical sleeve 100, 100' stays connected to nut 402 but to also allow nut 402 to rotate while cylindrical sleeve 100, 100' does not rotate and vice versa when cylindrical sleeve 100' is installed on nut 402. SEM nut 402 is configured to receive a bolt such as bolt 440 such that threads 442 of bolt 440 engage with nut threads 406.

Nut cavity 404 receives the bolt shaft, and bolt threads 442 pass through cavity 104, 104' of cylindrical sleeve 100, 100' into cavity 404 where nut threads 406 engage with bolt threads 442 such that as nut 402 rotates, cylindrical sleeve 100, 100' does not rotate and bolt 440 is pulled in direction 410 into and through nut cavity 404. Conversely, if nut 402 rotates in the opposite direction, cylindrical sleeve 100, 100' does not rotate and bolt 440 is pushed in direction 412 out of nut 400.

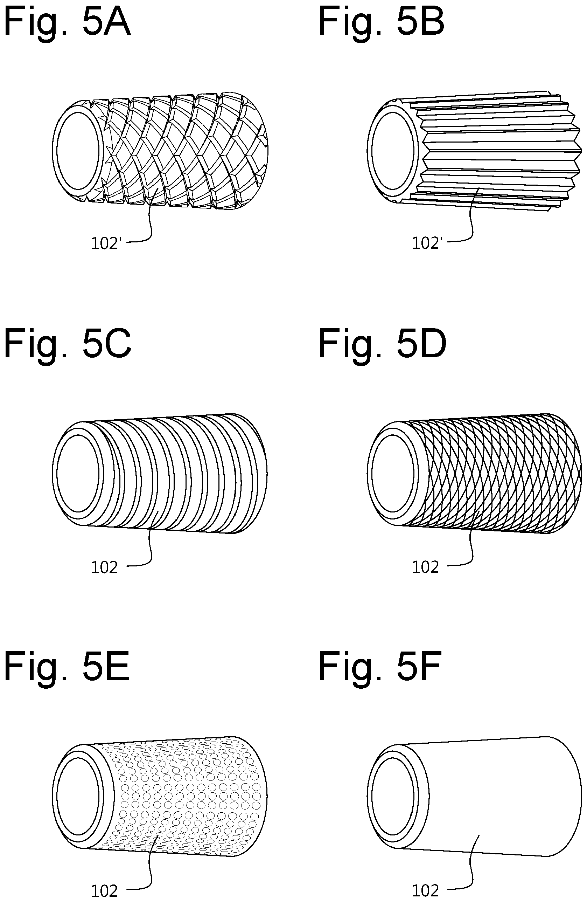

FIGS. 5A - 5F are views of cylindrical sleeve 100, 100' with example exterior surfaces 102'. These surfaces are examples of surfaces that may create a locking function in a bolted joint. These examples should be in no way limiting of the type of textured exterior surface capable of generating friction and/or a mechanical lock between cylindrical sleeve 100' and a receiving part. While FIGS. 5A - 5F show cylindrical sleeve 100' with a taper, these exterior surfaces may also be applied to exterior surface 102 of cylindrical sleeve 100.

FIG. 5A illustrates a cylindrical sleeve with a knurled exterior surface 102'.

FIG. 4B illustrates a cylindrical sleeve with a serrated exterior surface 102'.

FIG. 4C illustrates a cylindrical sleeve with a spirally serrated exterior surface 102'.

FIG. 4D illustrates a cylindrical sleeve with a hatched exterior surface 102'.

FIG. 4E illustrates a cylindrical sleeve with a patten of bumps on the exterior surface 102'.

FIG. 4F illustrates a cylindrical sleeve with a smooth surface 102'.

Additionally, in some embodiments, all or part of exterior surface 102' may also include a textured surface configured to create a locking function between exterior surface 102, 102' and a surface of a receiving part. While the entire exterior surfaces 102' are shown as having a texture in Figs. 5A-5F, some embodiments could have only part of the surface be textured with other parts being smooth. A smooth exterior surface may be less costly as compared to producing a cylindrical sleeve with an exterior surface having a rough texture.

Textured surface can be formed through knurling and/or shot peening or any other suitable process for the defined shape and application of the cylindrical sleeve.

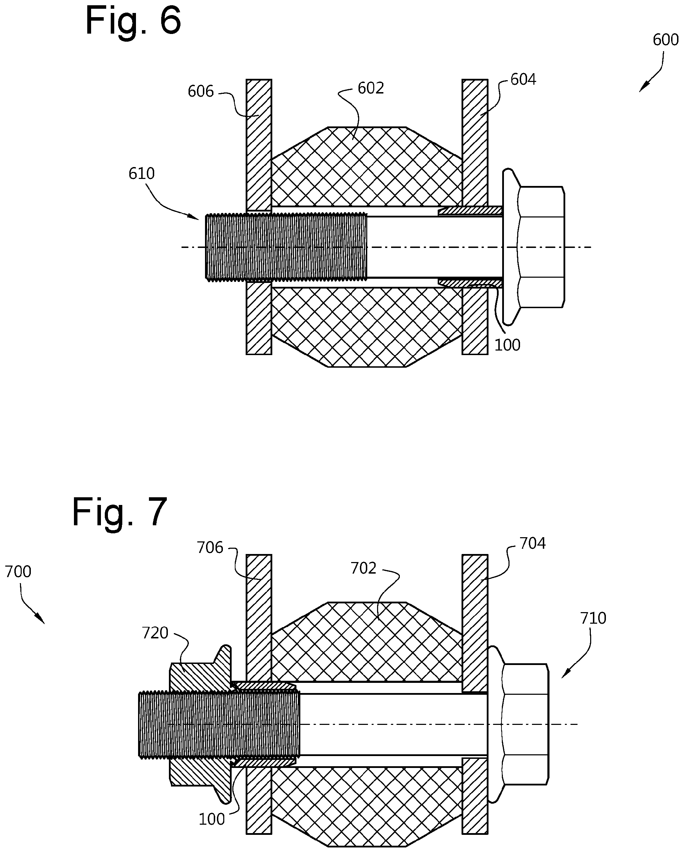

FIG. 6 illustrates a cross-sectional view of assembly 600 including cylindrical sleeve 100. Assembly 600 includes first receiving part 602 and second receiving part 604 and third receiving part 606. Receiving parts 604 and 606 may be two ends of the same receiving part. Receiving parts 602, 604, 606 may be configured to receive SEM bolt 610 such as those previously described with respect to figures 3A- 3E.

It is not necessary to access assembly 600 from the side of receiving part 606 because SEM bolt 610 is inserted in receiving part 604 and a tightening tool rotates the bolt from only its bolt head, with the exterior surface 102 cylindrical sleeve 100 forming the mechanical connection on the side of assembly 600 closest to the bolt head.

Cylindrical sleeve 100, 100' of SEM bolt 610 may fit inside a hole of receiving part 604 such that exterior surface 102 makes contact with receiving part 604, thereby creating a mechanical lock between cylindrical sleeve 100, 100' and receiving part 604. Typically, cylindrical sleeve 100, 100' is sized such that it must be press-fit into the hole of receiving part and there is no space allowing for rotation or other movement of cylindrical sleeve 100, 100' with respect to receiving part 604. Cylindrical sleeve 100, 100' may additionally be sized and configured to extend through receiving part 604 and make contact with receiving part 602. Cylindrical sleeve 100, 100' may make an additional mechanical lock between cylindrical sleeve 100, 100' and receiving part 602. Cylindrical sleeve 100, 100' may also help to align a bolt shaft of SEM bolt 610 to pass through receiving parts 602, 604, and 606. Receiving part 606 may include internal threads to engage bolt threads of SEM bolt 610.

As previously stated, cylindrical sleeve 100, 100' may extend through receiving part 604 and make contact with receiving part 602. As such, cylindrical sleeve 100, 100' may align receiving parts 602 and 604 to fix assembly 600 in a desired configuration.

The mechanical lock created between cylindrical sleeve 100, 100' and a receiving part creates a bolted joint that is more resistant to shear forces. Cylindrical sleeve 100, 100' reduces the area that shear forces can act on a bolt, thus reducing the overall shear forces acting on the bolt. As a result, the bolted joint is less likely to slip as compared to a conventional bolted joint. For example, a bolted joint in a motor or engine may be subject to shear forces during operation. Over time, the shear forces may loosen the bolted joint. Incorporating a cylindrical sleeve 100, 100' into bolted joint reduces the shear area of the bolted joint such that less shear forces are acting on the bolt which minimizes or prevents slippage of the. This in turn may reduce overall maintenance needed on an assembly such as a motor or engine.

Because cylindrical sleeve 100, 100' reduces the amount of shear forces acting on a bolt as compared to using conventional bolts alone, bolt size may be reduced without affecting performance. For example, depending on the assembly environment, a conventional M14 bolt in an assembly may be reduced to an M12 bolt with cylindrical sleeve 100, 100' because the M12 bolt with cylindrical sleeve 100, 100' can tolerate equal or greater shear forces than a convention M14 bolt.

FIG. 7 illustrates a cross-sectional view of exemplary assembly 700 including cylindrical sleeve 100, 100'. Assembly 700 includes first receiving part 702, second receiving part 704 and third receiving part 706. Receiving parts 704 and 706 may be two ends of the same receiving part. Receiving parts 702, 704, 706 may be configured to receive bolt 710 and a SEM nut such as SEM nut 720 such as the nut previously described with respect to FIG. 4.

Cylindrical sleeve 100, 100'of SEM nut 720 may fit inside a hole of receiving part 706 such that exterior surface 102, 102' makes contact with receiving part 706 and creates a mechanical lock between cylindrical sleeve 100, 100' and receiving part 706. Cylindrical sleeve 100, 100' may be configured to extend through receiving part 706 and make contact with receiving part 702. Cylindrical sleeve 100, 100' may make an additional mechanical lock between cylindrical sleeve 100, 100' and receiving part 702. Cylindrical sleeve 100, 100' may be configured to receive a thread length of bolt 710 which passes through cavity of SEM nut 720 and the threads of the thread length engage with nut threads of SEM nut 720.

As previously stated, cylindrical sleeve 100, 100' may extend through receiving part 706 and make contact with receiving part 702. As such, cylindrical sleeve 100, 100' may align receiving parts 702 and 704 to fix assembly 700 in a desired configuration.

A conventional serrated bolt, having a serrated shank, may be used in combination with cylindrical sleeve 100, 100' of SEM nut 720.

Assembly 700 requires access for a tightening tool to tighten SEM nut 720 and access to insert a bolt in receiving part 704.

Serration type bolts used in assemblies generate a locking functionality in screw joints. However, a serration type bolt may be replaced by a SEM bolt as previously described in FIGS. 3A - 3E of a smaller size and still generate the locking functionality required for the assembly.

Reducing bolt size with the use of cylindrical sleeve 100, 100'may reduce the overall weight of an assembly. For example, using an M12 bolt with a cylindrical sleeve instead of a conventional M14 bolt. For M12 and M14 bolts with a nominal reference dimension of 90, an M12 bolt may wight 95 grams as compared to the weight of an M14 bolt of 134 grams. If an assembly requires 10 M14 bolts, they may replace with a preassembled M12 bolt that includes a cylindrical sleeve such as cylindrical sleeve 100, 100'. This would result in a reduced assembly weight of about 390 grams for an assembly that requires 10 bolts. It should be understood that assemblies requiring more bolts will have a greater reduction in weight and assemblies requiring less bolts will have a lesser reduction in weight. Including a cylindrical sleeve may have the potential to reduce weight by 25 - 30% of a bolt or screw. Additionally, surround parts or mating parts of an assembly mays also be reduced.

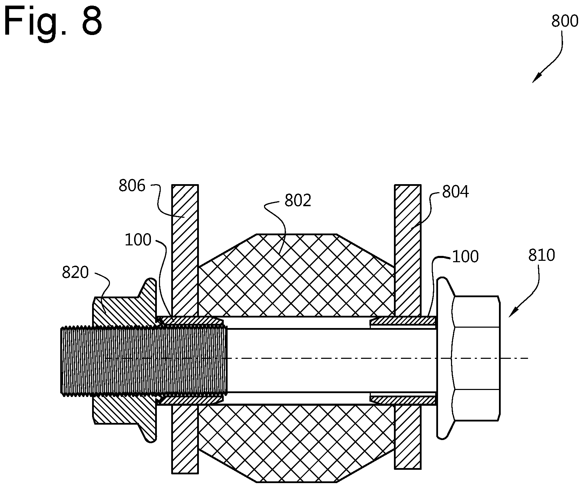

FIG. 8 illustrates a cross-sectional view of exemplary assembly 800 including cylindrical sleeve 100,100'. Assembly 800 includes first receiving part 802, second receiving part 804 and third receiving part 806. Receiving parts 804 and 806 may be two ends of the same receiving part. Receiving parts 802, 804, 806 may be configured to receive SEM bolt 810 and SEM nut 820 which include cylindrical sleeves 100, 100'.

Receiving part 806 may not be threaded. Receiving part 806 may receive SEM nut 820. Cylindrical sleeve 100, 100' may be configured to align a bolt shaft of SEM bolt 810 such that threads of SEM bolt 810 may engage with threads of SEM nut 820. Assembly 800 may require assembly tool access for both a bolt head of SEM bolt 810 and SEM nut 820. The addition of cylindrical sleeves 100, 100' on each of SEM bolt 810 and SEM nut 820 creates a mechanical lock at both ends of assembly 800. For example, creating a mechanical lock at receiving part 804 and receiving part 806.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiments disclosed, but that the present disclosure will include all embodiments falling within the scope of the appended claims.

## Claims

1. A cylindrical sleeve comprising:
an exterior surface configured to engage with a receiving part when the cylindrical sleeve is connected to a nut or a bolt/screw, wherein in the nut or the bolt/screw assembles the receiving part; and
a hollow interior.

2. The cylindrical sleeve of claim 1, further comprising:
a first end facing the nut or the bolt/screw; and
a ring extending from the first end, wherein the ring fits into a groove of the nut or a bolt head of the bolt/screw to connect the cylindrical sleeve to the nut or the bolt/screw, and wherein the nut or bolt/screw can rotate independently of the cylindrical sleeve.

3. The cylindrical sleeve of any of the preceding claims, wherein the cylindrical sleeve is formed of a ferrous material.

4. The cylindrical sleeve of any of the preceding claims, wherein the exterior surface is knurled.

5. The cylindrical sleeve of any of the preceding claims, wherein the exterior surface has a taper from the first end of the cylindrical sleeve having a first circumference to a second end of the cylindrical sleeve having a second circumference, wherein the first circumference is greater than the second circumference.

6. The cylindrical sleeve of any of the preceding claims, wherein the exterior surface is configured to generate a mechanical lock between the cylindrical sleeve and the receiving part.

7. The cylindrical sleeve of claims 5 or 6, wherein an angle of the taper of the exterior surface is based on a material of the cylindrical sleeve and/or the receiving part.

8. The cylindrical sleeve of any of claims 5-7, wherein the exterior surface has a smooth surface

9. The cylindrical sleeve of any of the preceding claims, wherein the hollow interior is further configured to surround a bolt shaft of the bolt.

10. The cylindrical sleeve of any of claims 5-9, wherein the second circumference is smaller than a thread circumference of a threaded portion of the bolt.

11. The cylindrical sleeve of any of the preceding claims, wherein the cylindrical sleeve extends perpendicular to the nut or the bolt head.

12. The cylindrical sleeve of claim 1, wherein an end of the cylindrical sleeve facing away from a bolt head of the bolt/screw has a circumference smaller than a ring circumference of a ring, wherein the ring extends from a shank of the bolt/screw to prevent the cylindrical sleeve from moving past the ring along the shank.

13. The cylindrical sleeve of claim 1, wherein a ring form an end of the cylindrical sleeve extends in the hollow interior and fits in a groove of a shank of the bolt/screw, wherein the ring and the groove are configured to loosely connect the cylindrical sleeve to the bolt/screw.

14. A bolt/screw comprising the cylindrical sleeve of any of claims 1-13, wherein the cylindrical sleeve is configured to surround a portion of the shank of the bolt/screw.

15. A nut comprising the cylindrical sleeve of any of claims 1-11, wherein the cylindrical sleeve is configured to surround a threaded portion the bolt/screw.
